# EUROPEAN PATENT SPECIFICATION

(11) **EP 4 366 074 B1**
(45) Date of publication and mention of the grant of the patent: **09.12.2026**
(21) Application number: 23760366.7
(22) Date of filing: 22.02.2023
(51) Int. Cl.: H01M 50/609, B05B 1/32, F16K 21/16, G01F 11/44

(54) **NOZZLE OPENING AND CLOSING DEVICE FOR ELECTROLYTE INJECTION INTO A BATTERY ASSEMBLY**
VORRICHTUNG ZUM ÖFFNEN UND SCHLIESSEN EINER DÜSE FÜR DAS ELEKTROLYTEINSPRITZEN IN EINE BATTERIEANORDNUNG
DISPOSITIF D'OUVERTURE ET DE FERMETURE D'UNE BUSE POUR L'INJECTION D'ÉLECTROLYTE DANS UN ENSEMBLE DE BATTERIE

(30) Priority: 25.02.2022 KR 20220000524 U
(43) Date of publication of application: 08.05.2024
(73) Proprietor: LG Energy Solution, Ltd., Seoul 07335 (KR)
(72) Inventor: KIM, Geon Guk, Daejeon 34122 (KR)
(74) Representative: Goddar, Heinz J.
(86) International application number: PCT/KR2023/002492
(87) International publication number: WO 2023/163492

(56) References cited:
- CH-A5- 668 815
- CN-A- 113 937 432
- KR-A- 20080 094 373
- KR-A- 20090 103 099
- KR-B1- 101 309 277
- KR-B1- 101 999 053
- KR-Y1- 200 472 727
- US-A- 3 888 276
- US-A1- 2020 303 700

## Description

### Technical Field

The present invention relates to a nozzle opening and closing device for electrolyte injection, which relates to a nozzle opening and closing device for electrolyte injection capable of preventing, in an electrolyte injection process, leakage of the electrolyte remaining in the nozzle upon moving of the injection nozzle or waiting for injection.

This application claims the benefit of priority based on Korean Utility Model Application No. 20-2022-0000524 dated February 25, 2022.

### Background Art

As the supply of portable small electrical and electronic devices is spread, development of new type secondary batteries such as nickel-metal hydride batteries and lithium secondary batteries is actively underway.

The lithium secondary battery means a battery using carbon such as graphite as a negative electrode active material, a lithium containing oxide as a positive electrode material, and a non-aqueous solvent as an electrolyte.

Such a secondary battery is manufactured in the form of a battery assembly by accommodating an electrode assembly, in which a positive electrode, a separator, and a negative electrode are sequentially measured, in an exterior material such as a pouch or a cylindrical can. Thereafter, a process of injecting the electrolyte into the battery assembly using an electrolyte injection device is performed.

In the conventional electrolyte injection process, the electrolyte was injected into the battery assembly using a nozzle.

At this instance, the nozzle for injecting the electrolyte into the battery assembly is formed in a simple cylindrical shape.

As the electrolyte injection nozzle is formed as the simple type cylindrical nozzle, the remaining electrolyte inside the electrolyte injection nozzle leaks out of the nozzle when the electrolyte injection nozzle moves and waits during the electrolyte injection process. Here, there is a problem that the electrolyte leaking out of the nozzle falls on the equipment of the electrolyte injection process or the battery assembly. As such, there are problems that the electrolyte injection process equipment is contaminated and corroded, and the pouch of the battery assembly is contaminated or the printing on the battery assembly is erased, by the electrolyte dropped into the electrolyte injection process equipment or the battery assembly. CN113937432A discloses a nozzle opening and closing device for electrolyte injection into a battery assembly comprising a nozzle having a discharge outlet for receiving an electrolyte and injecting the received electrolyte into the battery assembly.

In order to solve these problems, there is a need to develop a nozzle opening and closing device for electrolyte injection which can prevent residual electrolyte inside the nozzle for electrolyte injection from leaking out, and facilitates opening and closing of the electrolyte injection nozzle.

### Disclosure

### Technical Problem

It is an object of the present invention to provide a nozzle opening and closing device for electrolyte injection that can prevent, in an electrolyte injection process, leakage of residual electrolyte in the nozzle when the injection nozzle moves or waits for injection.

In addition, it is an object of the present invention to provide a nozzle opening and closing device for electrolyte injection that facilitates opening and closing of the electrolyte injection nozzle.

### Technical Solution

In order to solve the above-described problems, according to the present invention, a nozzle opening and closing device for electrolyte injection into a battery assembly according to claim 1 is provided, which comprises a nozzle having a discharge outlet for injecting an electrolyte into the battery assembly, an opening and closing plate rotatably mounted on the nozzle, and provided to open or close the discharge outlet of the nozzle, and an opening and closing control part provided to control whether the opening and closing plate is opened or closed based on the weight of the electrolyte applied to the opening and closing plate.

In addition, the opening and closing control part comprises a weight member provided so that rotational moment acts in the closing direction of the opening and closing plate, and the weight member is provided to be capable of adjusting a distance from the opening and closing plate.

### Advantageous Effects

As discussed above, the nozzle opening and closing device for electrolyte injection related to the present invention has the following effects.

It is possible to prevent residual electrolyte in the electrolyte injection nozzle from leaking out from the electrolyte injection nozzle when waiting for the electrolyte injection.

Also, during the electrolyte injection process, the electrolyte injection nozzle can be automatically opened due to the weight of the electrolyte.

In addition, as the electrolyte injection nozzle is automatically closed after completing the electrolyte injection, contamination of the electrolyte injection process equipment and contamination of the battery assembly due to leakage of the electrolyte can be prevented.

Furthermore, since the opening and closing of the electrolyte injection nozzle can be automatically controlled according to the weight of the electrolyte in the nozzle, the amount of the electrolyte injected into the battery assembly can be constantly adjusted.

### Description of Drawings

Figure 1 is a front view of a nozzle opening and closing device for electrolyte injection according to one example of the present invention.
Figure 2 is a view for explaining the opening and closing plate, and the opening and closing control part shown in Figure 1.
Figure 3 is a side view of the opening and closing plate, and the opening and closing control part shown in Figure 2.
Figure 4 is a plan view of the opening and closing plate, and the opening and closing control part shown in Figure 2.
Figure 5 is a plan view of the fixing part shown in Figure 1.
Figure 6 is a view for explaining a use state of the opening and closing control part shown in Figure 2.
Figure 7 is a view showing an operating state of the nozzle opening and closing device for electrolyte injection shown in Figure 1.

### Mode for Invention

Hereinafter, a nozzle opening and closing device for electrolyte injection according to one example of the present invention (hereinafter, also referred to as an "opening and closing device") will be described in detail with reference to the drawings.

In addition, regardless of the reference numerals, the same or corresponding components are given by the same or similar reference numerals, duplicate descriptions thereof will be omitted, and for convenience of explanation, the size and shape of each component member as shown can be exaggerated or reduced.

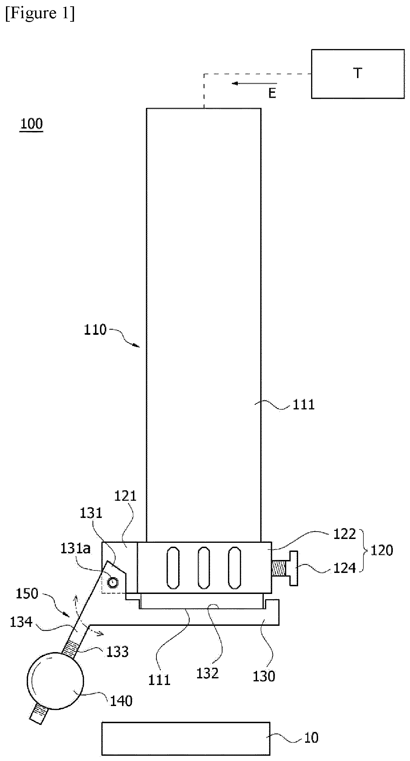

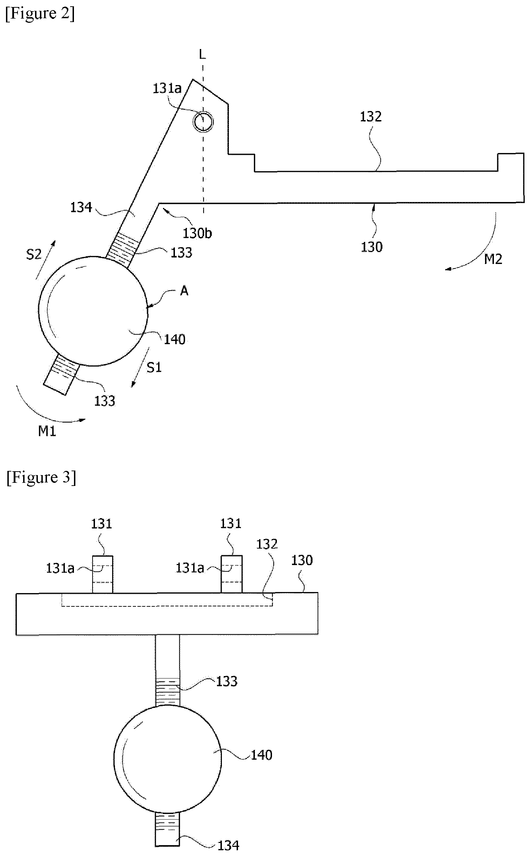

Figure 1 is a front view of a nozzle opening and closing device for electrolyte injection according to one example of the present invention, Figure 2 is a view for explaining the opening and closing plate, and the opening and closing control part shown in Figure 1, and Figure 3 is a side view of the opening and closing plate, and the opening and closing control part shown in Figure 2.

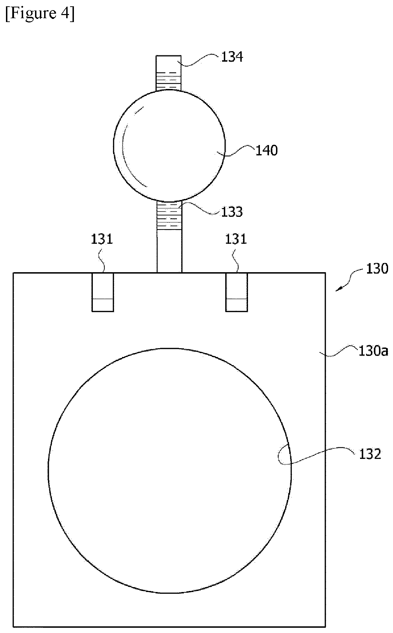

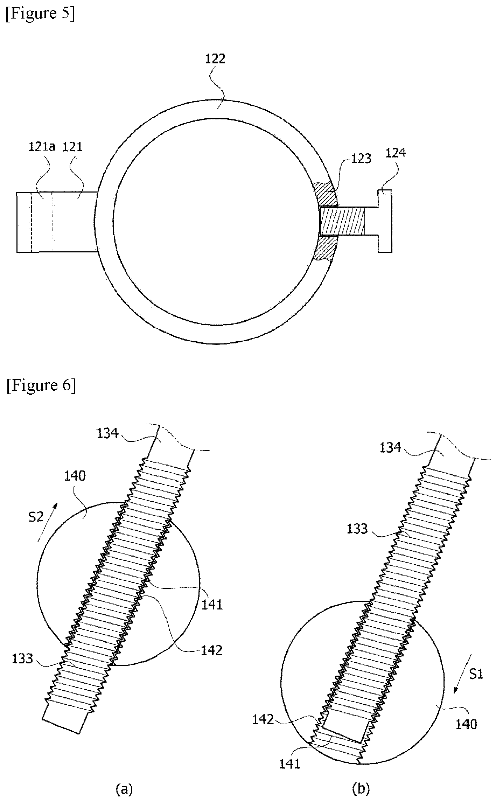

In addition, Figure 4 is a plan view of the opening and closing plate, and the opening and closing control part shown in Figure 2, Figure 5 is a plan view of the fixing part shown in Figure 1, Figure 6 is a view for explaining a use state of the opening and closing control part shown in Figure 2.

Referring to Figure 1, the opening and closing device (100) according to one example of the present invention comprises a nozzle (110), an opening and closing plate (130) and an opening and closing control part (150).

The opening and closing device (100) comprises a nozzle (110) having a discharge outlet (111) for receiving an electrolyte (E) and injecting the received electrolyte into a battery assembly (10), an opening and closing plate (130) rotatably mounted on the nozzle (110) and provided to open or close the discharge outlet (111) of the nozzle, and an opening and closing control part (150) provided to control whether the opening and closing plate (130) is opened or closed based on the weight of the electrolyte (E) applied to the opening and closing plate (130).

Also, the opening and closing control part (150) comprises a weight member (140) provided so that rotational moment acts in the closing direction (M1) of the opening and closing plate (130).

In addition, the weight member (140) is provided to be capable of adjusting a distance from the opening and closing plate (130).

Referring to Figure 1, the nozzle (110) is a portion through which the electrolyte (E) injected into the battery assembly (10) is supplied.

In the nozzle (110), one end is connected to an electrolyte tank (T) to receive an electrolyte, and the received electrolyte is discharged to the outside of the nozzle (110) through the other end.

At this instance, the nozzle (110) has a discharge outlet (111) at the other end. The discharge outlet (111) of the nozzle (110) is closed by the opening and closing plate (130).

Referring to Figures 2 to 4, the opening and closing plate (130) is provided in the form of a plate, at least one surface of which is flat, to close the outlet (111) of the nozzle (110).

The opening and closing plate (130) has a recessed portion (132) formed on one surface (130a) in contact with the outlet (111) of the nozzle (110) when it is in a closed state.

In addition, the diameter of the recessed portion (132) may be formed to be larger than the diameter of the outer circumference surface (111) of the nozzle (110), and the diameter of the recessed portion (132) may be formed in a size more than or equal to the diameter of the outer circumference surface (111) of the nozzle (110).

When the discharge outlet (111) of the nozzle (110) is closed by the opening and closing plate (130), the discharge outlet (111) of the nozzle (110) is in contact with the recessed portion (132), which closes the outlet (111) of the nozzle (110). When the electrolyte leaks from the discharge outlet (111) of the nozzle (110), the recessed portion (132) may perform a function of storing the leaked electrolyte in the space within the recessed portion, thereby preventing it from falling on the electrolyte injection process equipment (not shown) or the battery assembly (10).

Meanwhile, the opening and closing plate (130) is rotatably coupled to a position adjacent to the discharge outlet (111) of the nozzle (110).

The opening and closing plate (130) is provided to keep in a closed state of the discharge outlet (111) of the nozzle (110), or to rotate in one direction so that the discharge outlet (111) of the nozzle (110) is opened, according to the weight of the electrolyte supplied into the nozzle (110) to be applied.

The opening and closing device (100) may comprise a fixing part (120) mounted on the nozzle (110), and the fixing part (120) may have a rotating shaft on which the opening and closing plate (130) is rotatably mounted. As one example, the opening and closing plate (130) may be rotatably mounted on the rotating shaft through a pin.

The opening and closing plate (130) is mounted on the nozzle (110) through the fixing part (120).

Referring to Figures 1 and 5, the fixing part (120) is provided to be coupled to a position adjacent to the discharge outlet (111) of the nozzle (110), and to surround the outer circumference surface (111) of the nozzle (110).

The fixing part (120) may comprise a fixing member (122) provided to surround the outer circumference surface (111) of the nozzle (110) and a fixing means (124) fixing the fixing member (122) to the outer circumference surface (111) of the nozzle (110).

As one example, the fixing member (122) may be provided with a band or belt that may surround the nozzle (110). As one example, the fixing means (124) may be provided with a bolt having a tab (or thread).

Here, the fixing member (122) may have a fastening hole (123) into which the fixing means (124) is inserted, and the fixing means (124) may be fastened to the fastening hole (123) to contact the outer circumference surface (111) of the nozzle (110). Tabs (or threads) may be formed in the fastening hole (123) and the fixing means (124), respectively.

In such a structure, the fixing means (124) is fastened to the fastening hole (123) of the fixing member (122), whereby the fixing member (122) is fixed to the outer circumference surface (11) of the nozzle (110) by the fixing means (124).

Meanwhile, the opening and closing plate (130) is rotatably mounted on the fixing member (122).

That is, the fixing means (124) may be coupled to one region of the fixing member (122), and the opening and closing plate (130) may be coupled to another region of the fixing member (122). The fixing member (122) is provided with a first coupling piece (121) through which a first coupling hole (121a) is formed.

In addition, a second coupling piece (131) through which a second coupling hole (131a) is formed may be provided in the opening and closing plate (130). At this instance, the opening and closing plate (130) may be rotatably mounted to the fixing part (120) through a pin (not shown) passing through the second coupling hole (131a) and the first coupling hole (121a).

In a state where the discharge outlet (111) of the nozzle (110) is closed, the opening and closing plate (130) is provided to maintain the closed state, or to rotate in one direction so that the discharge outlet (111) of the nozzle (110) is opened, according to the weight of the electrolyte inside the nozzle (110).

The opening and closing control part (150) is provided to control whether the opening and closing plate (130) is opened or closed based on the weight of the electrolyte supplied to the nozzle (110) to be applied to the opening and closing plate (130).

The opening and closing control part (150) maintains the state where the discharge outlet (111) of the nozzle (110) is closed based on the weight of the electrolyte in the nozzle applied to the opening and closing plate, and to this end, it supports so that the opening and closing plate (130) does not rotate, or rotates the opening and closing plate (130) so that the discharge outlet (111) of the nozzle (110) is opened.

The opening and closing control part comprises a rod (134) and a weight member (140).

The opening and closing control part (150) is formed to extend from the end (130b) of the opening and closing plate (130), and comprises a rod (134) where the position of the weight member (140) is movably mounted.

At this instance, the opening and closing plate (130) and the rod (134) have the same rotation center, and when the weight of the electrolyte is applied to the opening and closing plate (130), the rotational moment acts to the opening and closing plate (130) in the opening direction (M2), and the rotational moment acts to the weight member (140) in the closing direction (M1) of the opening and closing plate (130).

Referring to Figures 2 and 6, when the weight member (140) on the rod (134) is moved in a direction (S1) away from the opening and closing plate (130), the rotational moment is increased in the closing direction (M1) of the opening and closing plate (130). Conversely, when the weight member (140) on the rod (134) is moved in a direction (S2) approaching the opening and closing plate (130), the rotational moment is reduced in the closing direction (M1) of the opening and closing plate (130).

The rod (140) may be formed to extend in different directions from the opening and closing plate (130) based on the rotation center. As one example, the rod (134) is formed to extend in a downside direction of the opening and closing plate (130) based on the state where the opening and closing plate is closed.

In the state where the opening and closing plate (130) is closed, the rod (134) and the opening and closing plate (130) may be located, based on a virtual line segment (L) passing through the rotation center and being orthogonal to the opening and closing plate, in the left and right regions of the line segment, respectively.

As one example, the rod (134) may be provided in the form of a stick having a predetermined length. Referring to Figure 2, the rod (134) may be provided to be inclined at an oblique angle with respect to the opening and closing plate (130).

The weight member (140) is mounted at the end of the rod (134).

The weight member (140) has a weight corresponding to that of the opening and closing plate (130) to keep the state where the opening and closing plate (130) closes the discharge outlet (111) of the nozzle (110).

The weight member (140) is inserted into and coupled to the rod (134), and movably coupled along the longitudinal direction of the rod (134). When the distance between the weight member (140) and the opening and closing plate (130) is adjusted, the magnitude of the rotational moment generated in the closing direction (M1) of the opening and closing plate (130) changes, so that the distance of the weight member (140) may be pre-adjusted in consideration of the weight of the residual electrolyte.

For example, as shown in Figure 6(a), when the weight of the residual electrolyte that the opening and closing plate is opened is set to be low, the weight member (140) may be located close to the opening and closing plate (130). Conversely, as shown in Figure 6(b), when the weight of the residual electrolyte that the opening and closing plate is opened is set to be high, the weight member (140) may be located far from the opening and closing plate (130).

The weight member (140) may be provided so that the entire region is coupled to the rod (134), or a partial region is coupled thereto.

Referring to Figure 6, a first tab (133) is formed on the outer circumference surface of the rod (134), and the weight member (140) is formed in a binding hole (142) and a binding hole (142) into which the rod (134) is inserted, and has a second tab (141) bound to the first tab (133). At this instance, the first tab (133) may be bound to the entire region or a partial region of the second tab (141).

The area (or length) of the first tab (133) may be larger than the area (or length) of the second tab (141).

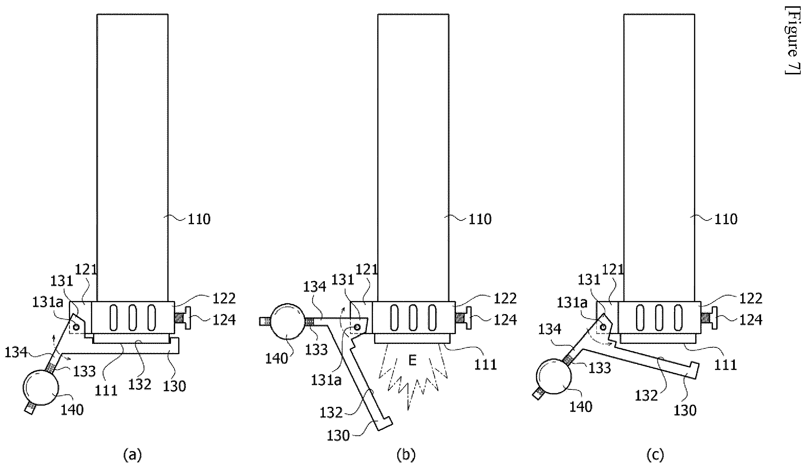

Figure 7 is a view showing an operating state of the nozzle opening and closing device for electrolyte injection shown in Figure 1.

Referring to Figure 7, the electrolyte is supplied into the nozzle (110). In the nozzle (110), it is controlled by the opening and closing control part (150) where the opening and closing plate (130) is opened or closed based on the weight of the electrolyte supplied to the inside of the nozzle (110).

The rotational moment is generated in the closing direction (M1) of the opening and closing plate (130) by the weight member (140) based on the rotation center, and the rotational moment is generated in the opening direction (M2) of the opening and closing plate (130) by the weight of the electrolyte applied to the opening and closing plate (130). In such a structure, when the rotational moment generated in the closing direction (M1) is greater than the rotational moment generated in the opening direction (M2), the opening and closing plate may be maintained in the closed state. Conversely, when the rotational moment generated in the closing direction (M1) is smaller than the rotational moment generated in the opening direction (M2), the opening and closing plate is opened.

As described above, by adjusting the position of the weight member (140) on the rod, it is possible to adjust the magnitude of the rotational moment generated in the closing direction (M1). That is, by setting the position of the weight member (140) in advance in consideration of the weight of the residual electrolyte when the electrolyte is not injected, the opening and closing plate (130) may be set to be automatically closed.

As one example, referring to Figure 7(a), when the weight of the electrolyte applied to the opening and closing plate (130) through the nozzle (110) is lighter than the preset weight, it maintains a state where the discharge outlet (111) of the nozzle (110) is closed without being opened.

Referring to Figure 7(b), when the weight of the electrolyte applied to the opening and closing plate (130) through the nozzle (110) is greater than the preset weight, the discharge outlet (111) of the nozzle (110) is opened. At this instance, the electrolyte (E) is discharged from the nozzle (110) through the discharge outlet (111) of the nozzle (110). By the weight of the electrolyte (E) inside the nozzle (110), the opening and closing plate (130) rotates in one direction (opening direction) to open the discharge outlet (111) of the nozzle (110), and as a result, the electrolyte is discharged to the outside.

Referring to Figure 7(c), when the discharge of the electrolyte (E) inside the nozzle (110) is completed from the nozzle (110), the opening and closing plate (130) rotates to its original position to close the discharge outlet (111) of the nozzle (110).

Meanwhile, even when the discharge outlet (111) of the nozzle (110) is closed by the opening and closing plate (130), a small amount of residual electrolyte may remain inside the nozzle (110). At this instance, as shown in Figure 7(a), when the weight of the residual electrolyte applied to the opening and closing plate (130) through the nozzle (110) is lighter than the preset weight, it maintains the state where the discharge outlet (111) of the nozzle (110) is closed without being opened.

The preferred examples of the present invention as described above have been disclosed for illustrative purposes.

### Industrial Applicability

According to the nozzle opening and closing device for electrolyte injection related to at least one example of the present invention, it is possible to prevent the residual electrolyte in the electrolyte injection nozzle from leaking out from the electrolyte injection nozzle when waiting for the electrolyte injection.

## Claims

1. A nozzle opening and closing device (100) for electrolyte injection into a battery assembly (10) comprising:
a nozzle (110) having a discharge outlet (111) for receiving an electrolyte (E) and injecting the received electrolyte (E) into the battery assembly (10);
**characterised by** further comprising:
an opening and closing plate (130) rotatably mounted on the nozzle (110) and provided to open or close the discharge outlet (111) of the nozzle (110); and
an opening and closing control part (150) provided to control whether the opening and closing plate (130) is opened or closed based on the weight of the electrolyte (E) applied to the opening and closing plate (130), wherein
the opening and closing control part (150) comprises a weight member (140) provided so that rotational moment acts in the closing direction (M1) of the opening and closing plate (130), and
the weight member (140) is provided to be capable of adjusting a distance from the opening and closing plate (130).

2. The nozzle opening and closing device (100) according to claim 1, wherein
the opening and closing control part (150) is formed to extend from the end (130b) of the opening and closing plate (130), and comprises a rod (134) where the position of the weight member (140) is movably mounted,
the opening and closing plate (130) and the rod (134) have the same rotation center,
when the weight of the electrolyte (E) is applied to the opening and closing plate (130), the rotational moment acts to the opening and closing plate (130) in the opening direction (M2), and the rotational moment acts to the weight member (140) in the closing direction (M1) of the opening and closing plate (130).

3. The nozzle opening and closing device (100) according to claim 2, wherein
when the weight member (140) on the rod (134) is moved in a direction (S1) away from the opening and closing plate (130), the rotational moment is increased in the closing direction (M1) of the opening and closing plate (130).

4. The nozzle opening and closing device (100) according to claim 3, wherein
when the weight member (140) on the rod (134) is moved in a direction (S2) approaching the opening and closing plate (130), the rotational moment is reduced in the closing direction (M1) of the opening and closing plate (130).

5. The nozzle opening and closing device (100) according to claim 2, wherein
the rod (134) is formed to extend in different directions from the opening and closing plate (130) based on the rotation center.

6. The nozzle opening and closing device (100) according to claim 2, wherein
the weight member (140) is provided so that the entire region is coupled to the rod (134), or a partial region is coupled thereto.

7. The nozzle opening and closing device (100) according to claim 6, wherein
a first tab (133) is formed on the outer circumference surface of the rod (134), and
the weight member (140) is formed in a binding hole (142) and a binding hole (142) into which the rod (134) is inserted, and has a second tab (141) bound to the first tab (133).

8. The nozzle opening and closing device (100) according to claim 7, wherein
the first tab (133) is bound to the entire region or a partial region of the second tab (141).

9. The nozzle opening and closing device (100) according to claim 2, further comprising
a fixing part (120) mounted on the nozzle (110), wherein
the fixing part (120) has a rotating shaft (121) on which the opening and closing plate (130) is rotatably mounted.

10. The nozzle opening and closing device (100) according to claim 9, wherein
the fixing part (120) comprises a fixing member (122) provided to surround the outer circumference surface (111) of the nozzle (110); and
a fixing means (124) fixing the fixing member (122) to the outer circumference surface (111) of the nozzle (110).

11. The nozzle opening and closing device (100) according to claim 10, wherein
the fixing member (122) has a fastening hole (123) into which the fixing means (124) is inserted, and
the fixing means (124) is fastened to the fastening hole (123) to contact the outer circumference surface (111) of the nozzle (110).

12. The nozzle opening and closing device (100) according to claim 1, wherein
the opening and closing plate (130) has a recessed portion (132) formed on one surface in contact with the discharge outlet (111) of the nozzle (110) when it is in a closed state.

13. The nozzle opening and closing device (100) according to claim 12, wherein
the diameter of the recessed portion (132) is formed to be larger than the diameter of the outer circumference surface (111) of the nozzle (110).

## Patentansprüche

1. Düsenöffnungs- und -schließvorrichtung (100) zur Elektrolyteinspritzung in eine Batterieanordnung (10) aufweisend:
eine Düse (110) mit einem Abgabeauslass (111) zum Aufnehmen eines Elektrolyten (E) und Einspritzen des aufgenommenen Elektrolyten (E) in die Batterieanordnung (10);
**dadurch gekennzeichnet, dass** sie ferner aufweist:
eine Öffnungs- und Schließplatte (130), die drehbar an der Düse (110) angebracht ist und vorgesehen ist, um den Abgabeauslass (111) der Düse (110) zu öffnen oder zu schließen; und
ein Öffnungs- und Schließsteuerteil (150), das vorgesehen ist, um zu steuern, ob die Öffnungs- und Schließplatte (130) geöffnet oder geschlossen ist, basierend auf dem Gewicht des Elektrolyten (E), der auf die Öffnungs- und Schließplatte (130) aufgebracht wird, wobei
das Öffnungs- und Schließsteuerteil (150) ein Gewichtselement (140) aufweist, das so vorgesehen ist, dass ein Drehmoment in der Schließrichtung (M1) der Öffnungs- und Schließplatte (130) wirkt, und
das Gewichtselement (140) so vorgesehen ist, dass es in der Lage ist, einen Abstand von der Öffnungs- und Schließplatte (130) einzustellen.

2. Düsenöffnungs- und -schließvorrichtung (100) nach Anspruch 1, wobei
das Öffnungs- und Schließsteuerteil (150) so ausgebildet ist, dass es sich von dem Ende (130b) der Öffnungs- und Schließplatte (130) erstreckt, und eine Stange (134) aufweist, an der die Position des Gewichtselements (140) beweglich angebracht ist,
die Öffnungs- und Schließplatte (130) und die Stange (134) das gleiche Drehzentrum aufweisen,
wenn das Gewicht des Elektrolyten (E) auf die Öffnungs- und Schließplatte (130) aufgebracht wird, das Drehmoment auf die Öffnungs- und Schließplatte (130) in der Öffnungsrichtung (M2) wirkt und das Drehmoment auf das Gewichtselement (140) in der Schließrichtung (M1) der Öffnungs- und Schließplatte (130) wirkt.

3. Düsenöffnungs- und -schließvorrichtung (100) nach Anspruch 2, wobei
wenn das Gewichtselement (140) an der Stange (134) in einer Richtung (S1) weg von der Öffnungs- und Schließplatte (130) bewegt wird, das Drehmoment in der Schließrichtung (M1) der Öffnungs- und Schließplatte (130) erhöht wird.

4. Düsenöffnungs- und -schließvorrichtung (100) nach Anspruch 3, wobei
wenn das Gewichtselement (140) an der Stange (134) in einer Richtung (S2) bewegt wird, die sich der Öffnungs- und Schließplatte (130) nähert, das Drehmoment in der Schließrichtung (M1) der Öffnungs- und Schließplatte (130) verringert wird.

5. Düsenöffnungs- und -schließvorrichtung (100) nach Anspruch 2, wobei
die Stange (134) so ausgebildet ist, dass sie sich in unterschiedlichen Richtungen von der Öffnungs- und Schließplatte (130) basierend auf dem Drehzentrum erstreckt.

6. Düsenöffnungs- und -schließvorrichtung (100) nach Anspruch 2, wobei das Gewichtselement (140) so vorgesehen ist, dass der gesamte Bereich mit der Stange (134) gekoppelt ist oder ein Teilbereich damit gekoppelt ist.

7. Düsenöffnungs- und -schließvorrichtung (100) nach Anspruch 6, wobei
eine erste Lasche (133) an der Außenumfangsfläche der Stange (134) ausgebildet ist, und
das Gewichtselement (140) in einem Verbindungsloch (142) und einem Verbindungsloch (142) ausgebildet ist, in das die Stange (134) eingesetzt ist, und eine zweite Lasche (141) aufweist, die mit der ersten Lasche (133) verbunden ist.

8. Düsenöffnungs- und -schließvorrichtung (100) nach Anspruch 7, wobei
die erste Lasche (133) mit dem gesamten Bereich oder einem Teilbereich der zweiten Lasche (141) verbunden ist.

9. Düsenöffnungs- und -schließvorrichtung (100) nach Anspruch 2, ferner aufweisend
ein Befestigungsteil (120), das an der Düse (110) angebracht ist, wobei
das Befestigungsteil (120) eine Drehwelle (121) aufweist, an der die Öffnungs- und Schließplatte (130) drehbar angebracht ist.

10. Düsenöffnungs- und -schließvorrichtung (100) nach Anspruch 9, wobei
das Befestigungsteil (120) ein Befestigungselement (122) aufweist, das so vorgesehen ist, dass es die Außenumfangsfläche (111) der Düse (110) umgibt; und
ein Befestigungsmittel (124), das das Befestigungselement (122) an der Außenumfangsfläche (111) der Düse (110) befestigt.

11. Düsenöffnungs- und -schließvorrichtung (100) nach Anspruch 10, wobei
das Befestigungselement (122) ein Befestigungsloch (123) aufweist, in das das Befestigungsmittel (124) eingesetzt ist, und
das Befestigungsmittel (124) an dem Befestigungsloch (123) befestigt ist, um die Außenumfangsfläche (111) der Düse (110) zu berühren.

12. Düsenöffnungs- und -schließvorrichtung (100) nach Anspruch 1, wobei
die Öffnungs- und Schließplatte (130) einen vertieften Abschnitt (132) aufweist, der auf einer Oberfläche in Kontakt mit dem Abgabeauslass (111) der Düse (110) ausgebildet ist, wenn sie sich in einem geschlossenen Zustand befindet.

13. Düsenöffnungs- und -schließvorrichtung (100) nach Anspruch 12, wobei
der Durchmesser des vertieften Abschnitts (132) so ausgebildet ist, dass er größer ist als der Durchmesser der Außenumfangsfläche (111) der Düse (110).

## Revendications

1. Dispositif d'ouverture et de fermeture d'une buse (100) pour une injection d'électrolyte dans un ensemble de batterie (10) comprenant :
une buse (110) dotée d'un orifice d'évacuation (111) pour recevoir un électrolyte (E) et injecter l'électrolyte (E) reçu dans l'ensemble de batterie (10) ;
**caractérisé en ce qu'**il comprend en outre :
une plaque d'ouverture et de fermeture (130) montée en rotation sur la buse (110) et agencée pour ouvrir ou fermer l'orifice d'évacuation (111) de la buse (110) ; et
un module de commande d'ouverture et de fermeture (150) agencé pour commander l'ouverture ou la fermeture de la plaque d'ouverture et de fermeture (130) en fonction du poids de l'électrolyte (E) appliqué à la plaque d'ouverture et de fermeture (130),
le module d'ouverture et de fermeture (150) comportant un élément de poids (140) agencé de sorte qu'un moment rotatif agisse dans le sens de la fermeture (M1) de la plaque d'ouverture et de fermeture (130), et
l'élément de poids (140) étant agencé afin d'être en mesure d'ajuster une distance depuis la plaque d'ouverture et de fermeture (130).

2. Dispositif d'ouverture et de fermeture d'une buse (100) selon la revendication 1,
le module d'ouverture et de fermeture (150) étant formé pour s'étendre du bout (130b) de la plaque d'ouverture et de fermeture (130), et comprenant une tige (134) où la position de l'élément de poids (140) est monté en rotation,
la plaque d'ouverture et de fermeture (130) et la tige (134) possédant le même centre de rotation,
lorsque le poids de l'électrolyte (E) est appliqué sur la plaque d'ouverture et de fermeture (130), le moment rotatif intervient sur la plaque d'ouverture et de fermeture (130) dans le sens de l'ouverture (M2), et le moment rotatif intervient sur l'élément de poids (140) dans le sens de la fermeture (M1) de la plaque d'ouverture et de fermeture (130).

3. Dispositif d'ouverture et de fermeture d'une buse (100) selon la revendication 2, dans lequel
lors du déplacement de l'élément de poids (140) sur la tige (134) dans une direction (S1) opposée à la plaque d'ouverture et de fermeture (130), le moment rotatif est accru dans le sens de la fermeture (M1) de la plaque d'ouverture et de fermeture (130).

4. Dispositif d'ouverture et de fermeture d'une buse (100) selon la revendication 3, dans lequel
lors du déplacement de l'élément de poids (140) sur la tige (134) dans une direction (S2) s'approchant la plaque d'ouverture et de fermeture (130), le moment rotatif est réduit dans le sens de la fermeture (M1) de la plaque d'ouverture et de fermeture (130).

5. Dispositif d'ouverture et de fermeture d'une buse (100) selon la revendication 2,
la tige (134) étant formée pour s'étendre dans différentes directions depuis la plaque d'ouverture et de fermeture (130) en fonction du centre de rotation.

6. Dispositif d'ouverture et de fermeture d'une buse (100) selon la revendication 2,
l'élément de poids (140) étant agencé de sorte que la zone entière soit couplée à la tige (134), ou qu'un zone partielle soit couplée à celle-ci.

7. Dispositif d'ouverture et de fermeture d'une buse (100) selon la revendication 6,
une première languette (133) étant formée sur la surface de la circonférence extérieure de la tige (134), et
l'élément de poids (140) étant formé en trou de liaison (142), et un trou de liaison (142) dans lequel est insérée la tige (134), et possédant une deuxième languette (141) fixée sur la première languette (133).

8. Dispositif d'ouverture et de fermeture d'une buse (100) selon la revendication 7,
la première languette (133) étant liée à la zone entière, ou à une zone partielle de la deuxième languette (141).

9. Dispositif d'ouverture et de fermeture d'une buse (100) selon la revendication 2, comprenant en outre
une pièce de fixation (120) montée sur la buse (110),
la pièce de fixation (120) possédant un arbre de rotation (121) sur lequel la plaque d'ouverture et de fermeture (130) est montée en rotation.

10. Dispositif d'ouverture et de fermeture d'une buse (100) selon la revendication 9, comprenant en outre
la pièce de fixation (120) comprenant un élément de fixation (122) agencé pour entourer la surface de la circonférence extérieure (111) de la buse (110) ; et
un dispositif de fixation (124) fixant l'élément de fixation (122) à la surface de la circonférence extérieure (111) de la buse (110).

11. Dispositif d'ouverture et de fermeture d'une buse (100) selon la revendication 10,
l'élément de fixation (122) possédant un orifice de fixation (123) dans lequel est inséré le dispositif de fixation (124), et
le dispositif de fixation (124) étant fixé dans l'orifice de fixation (123) pour contacter la surface de la circonférence extérieure (111) de la buse (110).

12. Dispositif d'ouverture et de fermeture d'une buse (100) selon la revendication 1,
la plaque d'ouverture et de fermeture (130) possédant une partie évidée (132) formée sur une surface au contact de l'orifice d'évacuation (111) de la buse (110) lorsqu'elle se trouve à l'état fermé.

13. Dispositif d'ouverture et de fermeture d'une buse (100) selon la revendication 12,
le diamètre de la partie évidée (132) étant formé de façon à ce qu'il soit plus grand que le diamètre de la surface de la circonférence extérieure (111) de la buse (110).
